# EUROPEAN PATENT APPLICATION

(11) **EP 2 743 451 A1**
(43) Date of publication of application: **18.06.2014**
(21) Application number: 13196761.4
(22) Date of filing: 11.12.2013
(51) Int. Cl.: F01D 5/14, F01D 5/18

(54) **Methods of manufacturing turbomachines blades with shaped channels by additive manufacturing, turbomachine blades and turbomachines**

(30) Priority: 13.12.2012 IT CO20120061
(71) Applicant: Nuovo Pignone S.p.A., 50127 Florence (IT)
(72) Inventor: Giovannetti, Iacopo, Florence 50127 (IT); Cosi, Lorenzo, Florence 50127 (IT); Tozzi, Pierluigi, Florence 50127 (IT); Innocenti, Mirco, 50127 Firenze (IT); Piraccini, Francesco, Florence 50127 (IT)
(74) Representative: Illingworth-Law, William Illingworth

(57) **Abstract**

A hollow blade (50) for a turbomachine comprises an airfoil portion; the airfoil portion (1) extends longitudinally for a length; the airfoil portion (1) is defined laterally by an external surface; the airfoil portion has at least one internal cavity (54, 55) extending along said length and defined laterally by an internal surface; the airfoil portion has a set of channels (56, 57) extending from the external surface to the internal surface; the openings of said channels (56, 57) on said external surface are aligned along a curved line that reflects an isobar on said external surface; additive manufacturing is particularly effective and advantageous for such blade.

## Description

### TECHNICAL FIELD

Embodiments of the subject matter disclosed herein generally relate to methods of manufacturing turbomachines blades with shaped channels, turbomachines blades so manufactured and turbomachines using such blades.

### BACKGROUND ART

In steam turbines, partial condensation of the steam occurs at their last stage or stages.

In particular condensation occurs on the airfoil portion of the stator blades of a so-called "condensing stage", typically the last stage of the turbine.

If droplets are generated as a consequence of condensation, they leave the static stator blades and they hit the rotating rotor blades; therefore, damages to the rotor blades may occur.

In order to reduce the damages caused by the droplets, the rotation speed of the rotor blades may be reduced; but in this way, the efficiency of the turbine is also reduced.

Alternatively, in order to reduce any damage on the rotor blades, solutions exist for collecting the condensation before the generation of droplets.

The most typical of these solutions consists in using hollow stator blades where condensation is likely to occur, providing holes or slots through the airfoil portion of the blades extending from the airfoil surface to the internal cavity, and sucking from the internal cavity so to that any condensation leaves the airfoil surface and enters the internal cavity. In this way, droplets on the airfoil surface of the stator blades are not generated and released.

These hollow blades are typically obtained through milling two metal bars, welding them together and mill finishing the assembled component, in order to produce the blades with a reasonable precision while avoiding the high cost of casting.

In gas turbines, hollow blades are sometime used for rotor blades in order to reduce weight of the rotating element.

These hollow blades are typically obtained through casting, particularly "investment casting", in order to obtain a rotating element having an extremely precise shape and size.

### SUMMARY

Therefore, there is a general need for improving the blades of turbomachines to be used in "Oil & Gas" applications.

Improvements may relate not only functional aspects, for example the shape and size of the airfoil portion, but also mounting, maintenance and especially manufacturing.

As far as manufacturing is concerned, it must be considered that in the field of "Oil & Gas" small-lot production is common also because solutions are studied (or at least customized) for a specific client.

In general, it is always desirable to have a high precision and a low production cost.

Ideally, in order to achieve high performances, the shape, size and material(s) of the blade should be freely selectable along its whole length.

Such general need is particularly felt for the hollow stator blades of steam turbines; these blades are generally located at the last stage or stages of a multistage steam turbine; these blades are very often made of metal.

An important consideration made by the Inventors is that the manufacturing method may be positively influence by the specific configuration of the blade to be manufactured.

A first aspect of the present invention is a hollow blade for a turbomachine.

According to embodiments thereof, a hollow blade for a turbomachine comprises an airfoil portion; the airfoil portion extends longitudinally for a length; the airfoil portion is defined laterally by an external surface; the airfoil portion has at least one internal cavity extending along said length and defined laterally by an internal surface; the airfoil portion has a set of channels extending from the external surface to the internal surface; the openings of said channels on said external surface are aligned along a curved line that reflects an isobar on said external surface.

In this case, additive manufacturing is particularly effective and advantageous.

A second aspect of the present invention is a turbomachine.

According to embodiments thereof, a turbomachine comprises a plurality of hollow blades; each of the hollow blades for a comprises an airfoil portion; the airfoil portion extends longitudinally for a length; the airfoil portion is defined laterally by an external surface; the airfoil portion has at least one internal cavity extending along said length and defined laterally by an internal surface; the airfoil portion has a set of channels extending from the external surface to the internal surface; the openings of said channels on said external surface are aligned along a curved line that reflects an isobar on said external surface.

A third aspect of the present invention is a method of manufacturing a turbomachine hollow blade.

According to embodiments thereof, a method of manufacturing a turbomachine hollow blade comprising an airfoil portion, the airfoil portion extends longitudinally for a length; the airfoil portion is defined laterally by an external surface; the airfoil portion has at least one internal cavity extending along said length and defined laterally by an internal surface; the airfoil portion has a set of channels extending from the external surface to the internal surface; the openings of said channels on said external surface are aligned along a curved line that reflects an isobar on said external surface; the airfoil portion is obtained by additive manufacturing.

Advantageous technical features of the blade, the turbomachine and the manufacturing method are set out in the detailed description.

### BRIEF DESCRIPTION OF DRAWINGS

The accompanying drawings, which are incorporated herein and constitute a part of the specification, illustrate embodiments of the present invention and, together with the description, explain these embodiments. In the drawings:
Fig. 1 shows a transversal cross-section of an airfoil portion of a first embodiment of a blade according to the present invention,
Fig. 2 shows a transversal cross-section of an airfoil portion of a second embodiment of a blade according to the present invention,
Fig. 3 shows a first tridimensional view of a length of an airfoil portion of a third embodiment of a blade according to the present invention - the third embodiment combines the features of the first and second embodiments,
Fig. 4 shows a second tridimensional view of a length of an airfoil portion of the embodiment of Fig. 3, the length being partially sectioned,
Fig. 5 shows a transversal cross-section of an airfoil portion of a fourth embodiment of a blade according to the present invention,
Fig. 6A shows a first lateral view of an airfoil portion of the embodiment of Fig. 5,
Fig. 6B shows a second lateral view of an airfoil portion of the embodiment of Fig. 5,
Fig. 7 shows a transversal cross-section of an airfoil portion of a fifth embodiment of a blade according to the present invention.

### DETAILED DESCRIPTION

The following description of exemplary embodiments refers to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

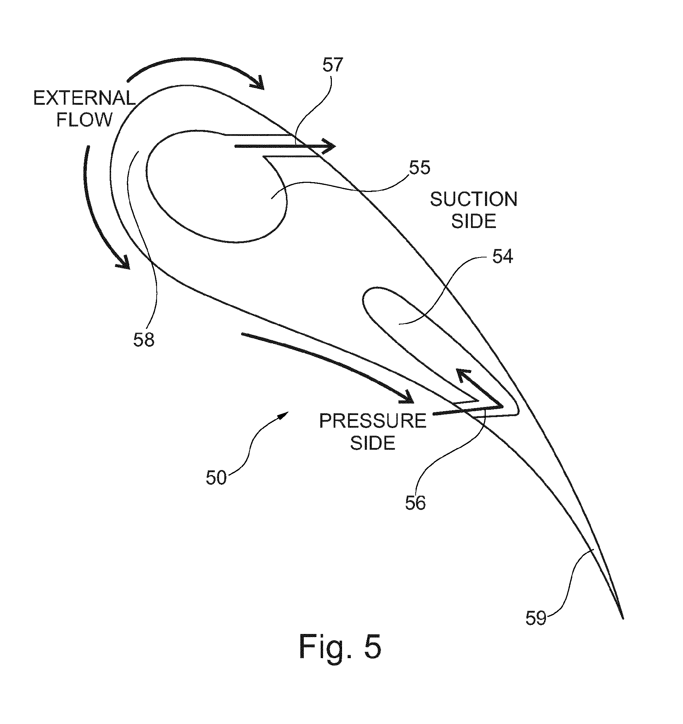

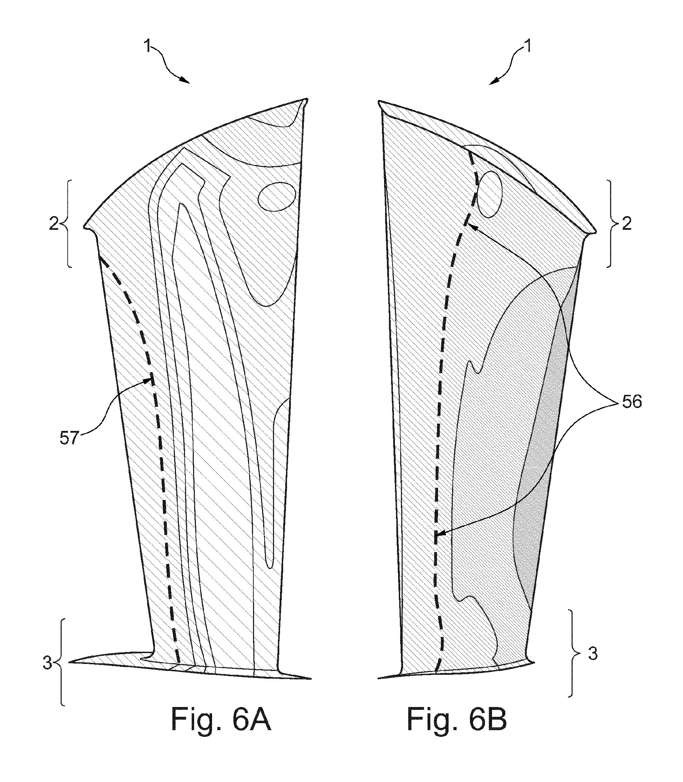

In order to understand the basic idea behind the present invention, reference may be made to the embodiment Fig. 5 and Fig. 6.

The blade 50 of Fig. 5 and Fig. 6, is for a turbomachine and, during operation of the turbomachine is surrounded by an external fluid flow (as shown in Fig. 5) that moves from the leading edge 58 of the airfoil 1 to the trailing edge 59 of the airfoil on both sides of the airfoil 1, i.e. the "suction side" and the "pressure side" (as shown in Fig. 5).

The blade 50 of Fig. 5 and Fig. 6 is hollow in the sense that it has at least one internal cavity; this blade has two internal cavities 54 and 55, each of the shapes of these cavities being different from the shape of the airfoil of the blade. This blade comprises an airfoil portion 1 that extends longitudinally for a length and has a first end region 2 and a second end region 3 (see Fig. 6); the airfoil portion 1 is defined laterally by an external surface (also called "airfoil surface").

The internal cavity or cavities 54 and 55 extend partially or entirely along said length and are defined laterally by an internal surface. In the embodiment of Fig. 5 and Fig. 6, the airfoil portion 1 has two sets of channels: a first set 56 for the cavity 54 on the pressure side and a second set 57 for cavity 55 on the suction side; each of these channels extends from the external surface of the airfoil to the internal surface of an internal cavity; these channels are straight and inclined with respect to the external surface of the airfoil (i.e. are not perpendicular to the tangential plane) or are curved; in the embodiment of Fig. 5 and Fig. 6, they are both straight and inclined.

The arrangement, shape, orientation, inclination of the channels takes into account the direction of flow on the suction side of the airfoil portion or the pressure side of the airfoil portion that strongly depends on the external shape of the airfoil portion; in the embodiment of Fig. 5 and Fig. 6, the flow in the channels of the set 56 is inward and flow in the channels of the set 57 is outward.

It is clear that, even if only one channel may carry out the function of sucking or ejecting a fluid, typical embodiments of the present invention will use a plurality of channels. The channels of the plurality extends between the external surface and the internal surface, and may be differently shaped and/or sized and/or oriented.

The channels used for sucking condensation from the airfoil surface of steam turbine blades are, typically, holes or, even more typically, slots.

The channels may have a non-uniform cross-section (this is not shown in the figures).

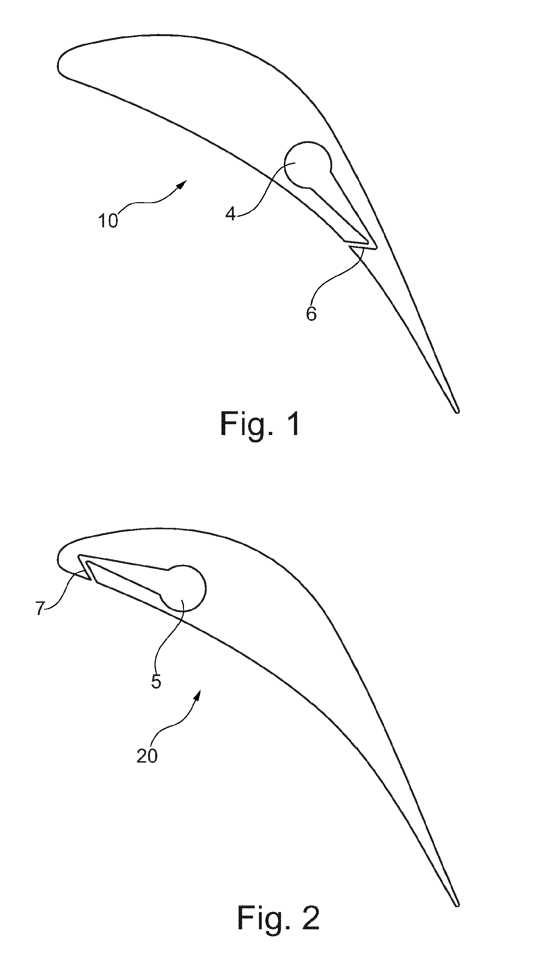

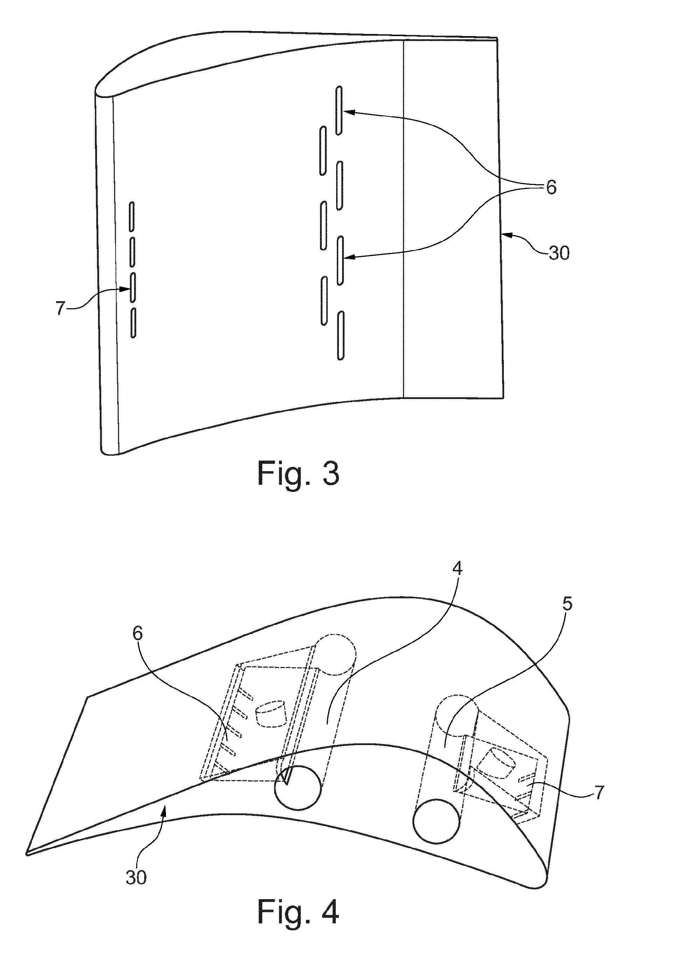

In the embodiment 10 of Fig. 1, there is only one internal cavity 4; channels 6 are inclined and lead to the laterally displaced internal cavity 4; the cavity 4 is use to suck condensation and the channels 6 are inclined so to facilitate the movement of the fluid from the external surface of the airfoil portion 1, along the channels 6 and into the internal cavity 4 (considering also the fluid flow around the airfoil portion during operation of the machine). In this embodiment, the channels 6 correspond to a plurality of long slots arranged in two rows (as shown in Fig. 3 on the right) and correspondingly one short conduit is shown in Fig. 1. The shape of the chamber 4 and the arrangement of the channels 6 allow to locate the sucking area very close to the trailing edge of the airfoil portion 1 of the blade 10.

In the embodiment 20 of Fig. 2, there is only one internal cavity 5; the channels 7 are inclined and lead to the laterally displaced internal cavity 5; the cavity 5 is used to eject a fluid (typically a hot fluid) and the channels 7 are inclined so to facilitate the movement of the fluid from the internal cavity 5, along the channels 7, to the external surface of the airfoil portion 1 (considering also the fluid flow around the airfoil portion during operation of the machine). In this embodiment, the channels 7 correspond to a plurality of short slots arranged in one rows (as shown in Fig. 3 on the left) and correspondingly one short conduit is shown in Fig. 2. The shape of the chamber 5 and the arrangement of the channels 7 allow to locate the ejection area very close to the leading edge of the airfoil portion 1 of the blade 20.

In the embodiment 30 of Fig. 3 and Fig. 4, the technical features of both embodiments 10 and 20 of Fig. 1 and Fig. 2 are combined, i.e. there is sucking of a fluid into the airfoil portion of the blade and there is ejection of fluid out of the airfoil portion of the blade; both sucking and ejection take place on the pressure side of the airfoil; on the contrary, in the embodiment of Fig. 5, sucking takes place on the pressure side while ejection takes place on the suction side; it is two be noted that a variant of the embodiment of Fig. 5 may provide to have sucking from both sides (i.e. two corresponding sets of channels) and ejection on both sides (i.e. two corresponding sets of channels).

The channels may lie in a plane perpendicular to the axis of the blade.

Alternatively, the channel may extend across a plurality of planes perpendicular to the axis of the blade; this is the case of channels 6 and 7 in Fig. 4.

Depending on the function of the internal cavity, the channels may start advantageously in a leading edge region of the blade (see e.g. Fig. 2) or a trailing edge region of the blade (see e.g. Fig. 1).

Depending on the function of the internal cavity, the channels may be shaped so that to facilitate flow of fluid from said external surface to said internal surface (see e.g.

Fig. 1) or from said internal surface to said external surface (see e.g. Fig. 2).

In the embodiment of Fig.5 and Fig. 6, the set 56 of channels extend between the external surface (pressure side) and the internal surface (cavity 54); the openings of the channels 56 on the external surface are aligned along a curved line (see Fig. 6B); in this way, they reflect approximately an isobar on the airfoil surface due to the external flow. The same is true for channels 57.

In the embodiment of Fig. 3 and Fig. 4, the set 6 of channels extend between the external surface of the airfoil to the internal surface (cavity); the openings of the channels 6 on the external surface are aligned along two distinct and remote (even if close to each other) lines (see Fig. 3 on the right). On the contrary, the openings of the channels 7 on the external surface are aligned along only one line (see Fig. 3 on the left).

For the same of clarity, it is worth noting that cavity 4 and cavity 5 may comprise internal reinforcing elements (for example in the shape of short cylinders as shown in Fig. 4) in order to avoid collapse of the cavity.

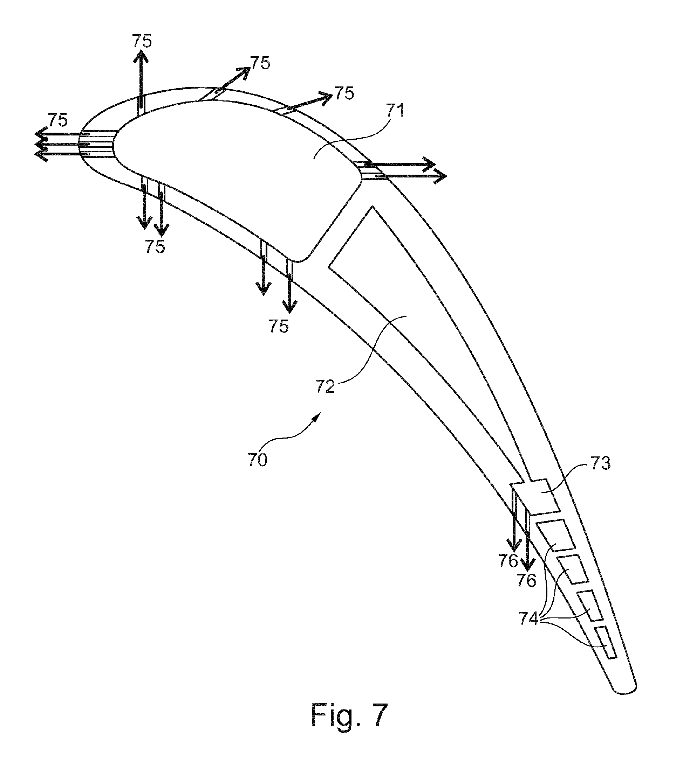

The embodiment 70 of Fig. 7 comprises a plurality of internal cavities 71, 72, 73, 74; cavities 74 are located in the area of the trailing edge of blade and are not connected to the external surface of the airfoil portion of the blade; they may be used for example for controlling the temperature of the trailing of the airfoil; cavities 71, 72 and 73 are all used for ejecting fluid, for example a hot fluid; cavity 71 is separated from cavities 72 and 73 and ejects from a plurality of channels 75 differently oriented; cavities 72 and 73 are in communication between each other and only cavity 73 ejects from a plurality of channels 76 similarly oriented; in this way cavity 71 and cavities 72 and 73 may be at different pressures and/or temperatures. Its is clear that the embodiment 70 of Fig. 7 may have a very high number of variants.

The solutions described above are particularly effective for stator blades of steam turbines used in turbomachine for "Oil & Gas" applications; in this case, the blades are preferably made of metallic material in a single piece.

More in general, the blade design according to the present invention may be used as (static or moving) phase separator device for a turbomachine (e.g. a turbine, a compressor, a pump) that gets in contact with a multiphase fluid, typically a combination of liquid and gas.

It is to be noted that the holes or slots may be used for sucking condensation and, alternatively, for ejecting a fluid, typically a hot fluid. It is to be noted that the internal cavities may be more than one and may have the same function or different functions (lightening the blade, cooling the blade, heating the blade, sucking fluid, ejecting fluid).

The realistic manufacturing methods of the blades according to the present invention are based on additive manufacturing; in this case and if there is a completely closed internal cavity, at least two holes (even very small) are associated to the cavity in order to evacuate the powder that remains in the cavity after the additive process is completed.

Considering for example the embodiment of Fig. 5 and Fig. 6, the airfoil portion 1 of the blade is obtained by additive manufacturing.

The additive manufacturing starts preferably from a first end 2 or 3 of the airfoil portion 1 and ends at a second end 3 or 2 of the airfoil portion 1.

Considering for example the embodiment of Fig. 5 and Fig. 6, the additive manufacturing proceeds perpendicularly to the axis of the blade; alternatively, the additive manufacturing may proceed inclinedly to the axis of the blade, preferably according to a fixed predetermined angle with respect to the axis of the blade.

The manufacturing of the blade comprising preferably a single additive manufacturing process at least for the whole airfoil portion.

Additive manufacturing is a very powerful and flexible technique; in this way, it is possible to bind a single granular material or a plurality of granular materials. Typically, materials used for stator blades of steam turbines used in turbomachine for "Oil & Gas" applications are metallic.

Additive manufacturing has many advantages with respect to the traditional technologies used for turbomachines blades, in particular for stator blades of steam turbines, as it allows a great design flexibility for the external shape of the blade as well as for the internal shape of the blade (in particular its internal cavity or cavities), as it allows to realize even small details in a shape (this includes the production of small blades), as it allows to realize graded materials in a blade (for example the material may vary along the length or height of a blade according to the mechanical and/or chemical requirements of the various specific points of the blade), as it allows a simpler manufacturing process and a lower manufacturing cost.

As far as manufacturing is concerned, it must be considered that in the field of "Oil & Gas" small-lot production is common also because solutions are studied (or at least customized) for a specific client. In general, it is always desirable to have a high precision and a low production cost.

## Claims

1. A hollow blade (50) for a turbomachine comprising an airfoil portion (1), wherein said airfoil portion extends longitudinally for a length, wherein said airfoil portion (1) is defined laterally by an external surface, wherein said airfoil portion (1) has at least one internal cavity (54, 55) extending along said length and defined laterally by an internal surface, wherein said airfoil portion (1) has a set of channels (56, 57) extending from said external surface to said internal surface, and wherein the openings of said channels (56, 57) on said external surface are aligned along a curved line that reflects an isobar on said external surface.

2. The turbomachine hollow blade of claim 1, wherein said airfoil portion (1) has two internal cavities (54, 55) extending along said length and defined laterally by internal surfaces, wherein said airfoil portion (1) has two corresponding sets of channels (56, 57) extending from said external surface to said internal surfaces, and wherein the openings of said channels (56, 57) on said external surface are aligned along two corresponding curved lines that reflect isobars on said external surface.

3. The turbomachine hollow blade of claim 2, wherein a first one (56) of said two lines is on a pressure side of the airfoil portion (1) and wherein a second one (57) of said two lines is on a suction side of the airfoil portion (1).

4. The turbomachine hollow blade of claim 1 or 2 or 3, wherein at least some of said channels (56, 57) are straight and inclined or straight and curved, with respect to said external surface.

5. The turbomachine hollow blade of any of the preceding claims, wherein said channels (57) starts in a leading edge region (58) of the blade.

6. The turbomachine hollow blade of any of the preceding claims, wherein said channels (56) starts in a trailing edge region (59) of the blade.

7. The turbomachine hollow blade of any of the preceding claims, wherein said channels (56) are shaped so that to facilitate flow of fluid from said external surface to said internal surface.

8. The turbomachine hollow blade of any of the preceding claims, wherein said channel (57) are shaped so that to facilitate flow of fluid from said internal surface to said external surface.

9. The turbomachine hollow blade of any of the preceding claims, being arranged as a stator blade of a steam turbine.

10. The turbomachine hollow blade of any of the preceding claims, being in a single piece.

11. A turbomachine comprising a plurality of hollow blades according to any of the preceding claims from 1 to 10.

12. A method of manufacturing a turbomachine hollow blade according to any of the preceding claims from 1 to 10, wherein said airfoil portion is obtained by additive manufacturing.

13. The manufacturing method of claim 12, comprising a single additive manufacturing process for the whole airfoil portion (1) starting from a first end (2, 3) of said airfoil portion (1) and ending at a second end (3, 2) of said airfoil portion (1).
